# EUROPÄISCHE PATENTSCHRIFT

(11) **EP 3 038 967 B1**
(45) Veröffentlichungstag und Bekanntmachung des Hinweises auf die Patenterteilung: **13.09.2017**
(21) Anmeldenummer: 14743995.4
(22) Anmeldetag: 24.07.2014
(51) Int. Cl.: B66C 15/00, B66D 1/54, G01N 3/08

(54) **VORRICHTUNG ZUR ERKENNUNG DER ABLEGEREIFE EINES HOCHFESTEN FASERSEILS BEIM EINSATZ AN HEBEZEUGEN**
DEVICE FOR DETECTING THE REPLACEMENT STATE OF WEAR OF A HIGH-STRENGTH FIBRE ROPE DURING USE IN LIFTING GEAR
DISPOSITIF DE DÉTERMINATION DU MOMENT DE DÉPOSE D'UN CÂBLE DE FIBRES ULTRA-RÉSISTANT LORSQU'IL EST UTILISÉ DANS DES ENGINS DE LEVAGE

(30) Priorität: 27.08.2013 DE 102013014265
(43) Veröffentlichungstag der Anmeldung: 06.07.2016
(73) Patentinhaber: Liebherr-Components Biberach GmbH, 88400 Biberach an der Riß (DE)
(72) Erfinder: MUPENDE, Ilaka, 89231 Neu-Ulm (DE); ZERZA, Horst, 88400 Biberach an der Riß (DE)
(74) Vertreter: Thoma, Michael
(86) Internationale Anmeldenummer: PCT/EP2014/002029
(87) Internationale Veröffentlichungsnummer: WO 2015/028113

(56) Entgegenhaltungen:
- WO-A1-2012/100938
- JP-A- H0 912 271
- US-A1- 2003 052 695

## Beschreibung

Die vorliegende Erfindung betrifft allgemein Hebezeuge wie Krane, die anstelle von Stahlseilen hochfeste Faserseile verwenden. Die Erfindung betrifft dabei insbesondere eine Vorrichtung zur Erkennung der Ablegereife eines hochfesten Faserseils beim Einsatz an solchen Hebezeugen, mit einer Erfassungseinrichtung zur Erfassung zumindest einer Seilkenngröße sowie einer Auswerteeinheit zur Auswertung der Seilkenngröße sowie Bereitstellung eines Ablegesignals in Abhängigkeit der Seilkenngrößenauswertung.

In jüngerer Zeit wird an Kranen versucht, anstelle der bewährten und seit vielen Jahren eingesetzten Stahlseile hochfeste Faserseile aus Kunstfasern wie beispielsweise Aramidfasern (HMPA), Aramid-/Kohlefasergemischen, hochmodulare Polyethylen-Fasern (HMPE) oder Poly(p-phenylene-2,6-benzobisoxazole)-Fasern (PBO) zu verwenden. Der Vorteil solcher hochfesten Faserseile liegt in ihrem geringen Gewicht. Bei gleichen Seildurchmessern und gleichen oder höheren Zugfestigkeiten sind solche hochfesten Faserseile deutlich leichter als entsprechende Stahlseile. Insbesondere bei hohen Kranen mit entsprechend großen Seillängen kommt hierdurch eine größere Gewichtsersparnis zustande, die in die Eigenlast des Krans eingeht und zu entsprechend höheren Nutzlasten bei ansonsten unveränderter Bauart des Krans führt.

Eine nachteilige Eigenschaft derartiger hochfester Faserseile ist jedoch ihr Bruchverhalten bzw. ihr Versagen ohne deutliche, längere Vorankündigung. Während sich bei Stahlseilen der Verschleiß deutlich zeigt und ein Versagen über längere Zeit vorher ankündigt, beispielsweise durch den Bruch einzelner Stahldrähte und ein entsprechendes Aufspleißen, das einfach bemerkt wird, zeigen hochfeste Faserseile kaum Anzeichen an übermäßigem Verschleiß, die mit dem Auge einfach wahrnehmbar wären und sich über längere Zeit vor dem eigentlichen Versagen deutlich zeigen würden. Insofern bedarf es intelligenter Überwachungsmaßnahmen, um die Ablegereife von hochfesten Faserseilen rechtzeitig zu erkennen.

Aus der WO 2012/100938 A1 ist es bekannt, für die Erkennung der Ablegereife eines hochfesten Faserseils an einem Kran verschiedene Seilablegekriterien zu prüfen, die sich entsprechend der Seileinsatzzeit und Belastung verändern. Als Seilablegekriterien werden dabei der Seildurchmesser, die Querdrucksteifigkeit im Sinne der sich bei Einklemmen des Seils ergebenden Querschnittsveränderungen und die durchlaufenen Lastspielzahlen überwacht. Diese Ablegekriterien sind einzeln betrachtet hinsichtlich ihrer Aussagekraft jedoch begrenzt, so dass in einer recht komplexen Betrachtung das Zusammenspiel dieser Ablegekriterien beobachtet und ausgewertet werden muss, um tatsächlich die Ablegereife sicher zu erkennen. Weitere Krane mit Überwachung der Seilablegereife sind aus den Schriften US 2003/052695 A1 und JP H09 12271 A bekannt.

Hiervon ausgehend liegt der vorliegenden Erfindung die Aufgabe zugrunde, eine verbesserte Vorrichtung zur Bestimmung der Ablegereife von hochfesten Faserseilen anzugeben, die Nachteile des Standes der Technik vermeidet und Letzteren in vorteilhafter Weise weiterbildet. Vorzugsweise soll eine einfache, aber doch verlässliche, präzise Bestimmung der Ablegereife erzielt werden, die die Restlebensdauer des Faserseils wirtschaftlich ausnutzt, ohne die Sicherheit zu gefährden und hierfür mit einfachen, auch unter schweren Einsatzbedingungen an Baumaschinen verlässlich arbeitenden Erfassungseinrichtungen auskommt.

Erfindungsgemäß wird die genannte Aufgabe durch eine Vorrichtung gemäß Anspruch 1 sowie einen Kran gemäß Anspruch 10 gelöst. Bevorzugte Ausgestaltungen der Erfindung sind Gegenstand der abhängigen Ansprüche.

Es wird also vorgeschlagen, die Seilbiegesteifigkeit zu überwachen und die Ablegereife anhand der Seilbiegesteifigkeit zu bestimmen. Erfindungsgemäß umfasst die Erfassungseinrichtung Biegesteifigkeits-Bestimmungsmittel zum Bestimmen der Seilbiegesteifigkeit des Seils, wobei die Auswerteeinheit das Ablegesignal in Abhängigkeit der bestimmten Seilbiegesteifigkeit bereitstellt. Während es bei Stahlseilen keine wesentlichen Veränderungen der Biegesteifigkeit in Abhängigkeit der Seillaufzeit gibt, verhält sich dies bei hochfesten Faserseilen anders. Die zu Beginn des Seileinsatzes noch biegeweichen Filamente werden durch die Belastung auf Zug und Biegung allmählich entsprechend der Belastung härter und das Seil biegesteifer. Dieser Anstieg der Seilbiegesteifigkeit ist gut messbar, so dass die Ablegereife verlässlich und präzise anhand der überwachten Seilbiegesteifigkeit bestimmbar ist. Es zeigt sich, dass Seilbiegeversuche mit einem neuen Seil eine recht geringe Biegesteifigkeit ergeben, während Seile, die bis zum Bruch gefahren werden, aufgrund der langen und hohen Belastung gegen Ende eine überaus hohe Biegesteifigkeit zeigen, die um ein Vielfaches gegenüber dem Neuzustand angestiegen ist. Dieser Anstieg der Biegesteifigkeit erfolgt kontinuierlich gemeinsam mit der steigenden Lastwechselzahl und erreicht den höchsten Punkt beim Bruch des Seiles, so dass die Auswerteeinrichtung die Ablegereife relativ einfach bestimmen kann.

In Weiterbildung der Erfindung können die Biegesteifigkeits-Bestimmungsmittel zwei voneinander beabstandete Seilauflagerelemente sowie zumindest einen Querkraftstempel zum Beaufschlagen des Seils mit einer Querkraft aufweisen, wobei der Querkraftstempel und/oder die Seilauflagerelemente quer zur Seillängsrichtung verfahrbar sind, derart, dass das Seil eine Biegung erfährt. Vorteilhafterweise kann ein quer verfahrbarer Querkraftstempel zwischen den beiden voneinander beabstandeten Seilauflagerelementen angeordnet sein und im Wesentlichen quer zu einer Verbindungsgeraden durch die beiden Seilauflagerelemente verfahren werden, wobei die Verfahrbarkeit derart beschaffen sein kann, dass der Druck- bzw. Eingriffskopf des Querkraftstempels auf die genannte Verbindungslinie zu und vorteilhafterweise über diese Verbindungslinie hinweg gefahren werden kann. Prinzipiell wäre es auch möglich, den genannten Querkraftstempel nicht zwischen den beiden Seilauflagerelementen anzuordnen, sondern auf einer Seite der genannten beiden Seilauflagerelemente, insbesondere im Bereich einer Verlängerung der zuvor genannten Verbindungsgeraden über die beiden Seilauflagerpunkte hinaus, so dass der Querkraftstempel das Seil wie einen auskragenden Biegebalken beaufschlagt.

Bei der zuvor genannten Anordnung des Querkraftstempels zwischen den beiden Seilauflagerelementen ist die Anordnung vorteilhafterweise derart getroffen, dass die beiden Seilauflagerelemente auf der einen Seite des Seils angeordnet sind, während der Querkraftstempel auf der gegenüberliegenden Seite des Seils angeordnet wird.

Dem Querkraftstempel und/oder den Seilauflagerrelementen kann dabei in Weiterbildung der Erfindung ein Kraftmesser und/oder ein Stellwegmesser zugeordnet sein, um die auf das zu prüfende Seil aufgebrachte Querkraft und/oder den Stellweg des Querkraftstempels und/oder der Seilauflagerelemente quer zur Seillängsrichtung zu messen. Anstelle eines solchen Stellwegmessers könnte auch ein Durchbiegungssensor vorgesehen sein, der direkt die Durchbiegung bzw. die Verschiebung des Seils quer zur Seillängsrichtung misst.

Die Seilbiegesteifigkeit kann von den Biegesteifigkeits-Bestimmungsmitteln anhand der mit einer vorbestimmten Querkraft erzielbaren Durchbiegung des Seils und/oder anhand der für eine vorbestimmte Durchbiegung benötigten Querkraft bestimmt werden. In Weiterbildung der Erfindung können diese beiden Bestimmungskriterien auch in Kombination miteinander angewandt werden, insbesondere dahingehend, dass sowohl bestimmt wird, welche Kraft für eine vorbestimmte Durchbiegung benötigt wird und welche Durchbiegung sich bei einer vorbestimmten Querkraft einstellt, um sich eventuell ergebende Nichtlinearitäten bei der Querdrucksteifigkeit zu berücksichtigen.

In vorteilhafter Weiterbildung der Erfindung wird das Seil an den genannten Seilauflagerelementen und/oder am Querkraftstempel nur abgestützt, ohne sich ergebende Biege- und Drehmomente abzufangen. Insbesondere sind die Seillagerelemente und der Querkraftstempel derart ausgebildet, dass einem Verdrehen bzw. Krümmen des Seils kein Momentenwiderstand entgegengesetzt wird. Beispielsweise können die Seillagerelemente und der Querkraftstempel einseitige Abstützpunkte bzw. -flächen bilden, die im Wesentlichen nur quer zur Seillängsrichtung Kräfte abfangen, jedoch keine Biegemomente auf das Seil übertragen.

Um die Messung der Seilbiegesteifigkeit nicht durch Zugkraftbelastungen auf das Seil zu verfälschen bzw. zu beeinflussen, umfassen die Biegesteifigkeitsbestimmungsmittel einen Zugkrafteinsteller, der für sich wiederholende Bestimmungen der Seilbiegesteifigkeit jeweils die selben Zugkraftverhältnisse am Seil einstellt. Insbesondere kann der genannte Zugkrafteinsteller eine Zugkraftentlastungseinrichtung umfassen, die das Seil von Zugkräften im Wesentlichen vollständig entlastet, wenn die Seilbiegesteifigkeit bestimmt wird.

Die genannte Zugentlastungseinrichtung kann hierbei grundsätzlich verschieden ausgebildet sein. In vorteilhafter Weiterbildung der Erfindung kann die Zugentlastungseinrichtung Haltemittel zum Festhalten des Seils in Seillängsrichtung, vorzugsweise zumindest eine Seilklemme zum Klemmen des Seils umfassen, um insbesondere sich am Lasthaken befindliche Hublasten abzufangen und den auf die Seilbiegesteifigkeit zu prüfenden Seilabschnitt hiervon entlastet. Insbesondere kann die genannte Seilklemme dem Seil auf einer der Seiltrommel abgewandten Seite der Biegesteifigkeits-Bestimmungsmittel zugeordnet sein, so dass bei geklemmtem Seil durch Nachlassen bzw. Abspulen der Seiltrommel eine näherungsweise vollständige Zugentlastung am zu prüfenden Seilabschnitt herbeigeführt werden kann. Entsprechende Ansteuermittel können die Seiltrommel ansteuern, um diese ein vorbestimmtes Stück weit abzuspulen bzw. in Hubabsenkrichtung betätigen, so dass zwischen der Seilklemme und der Seiltrommel Schlaffseil erzeugt wird.

Die Auswerteeinrichtung zur Bereitstellung eines Ablegesignals kann dabei grundsätzlich in verschiedener Art und Weise arbeiten, beispielsweise sich einstellende Veränderungen der Seilbiegesteifigkeit überwachen und/oder absolute Werte der Seilbiegesteifigkeit überwachen. Insbesondere kann die genannte Auswerteeinheit derart ausgebildet sein, dass ein Ablegesignal dann bereitgestellt wird, wenn die Seilbiegesteifigkeit und/oder deren Veränderung einen zugehörigen Grenzwert überschreitet.

Beispielsweise kann mit einem neuen Seil eine oder auch mehrere Referenzmessungen durchgeführt werden, so dass dann die sich im Betrieb einstellende prozentuale Veränderung der Seilbiegesteifigkeit mit einem Grenzwert für die Veränderung verglichen und bei Überschreiten bzw. Erreichen dieses Grenzwerts das Ablegesignal bereitgestellt wird. Insbesondere kann das Ablegesignal bereitgestellt werden, wenn die Seilbiegesteifigkeit über einen noch tolerierbaren Grenzwert hinaus ansteigt. Alternativ oder zusätzlich kann die überwachte und im Betrieb laufend bzw. zyklisch immer wieder bestimmte Seilbiegesteifigkeit mit einem absoluten Grenzwert verglichen werden, der für einen bestimmten Seiltyp oder das jeweilige Seil werksseitig vorgegeben wird, um dann bei Erreichen bzw. Überschreiten dieses Grenzwerts das Ablegesignal bereitzustellen. Weiter alternativ oder zusätzlich kann das Ablegesignal bereitgestellt werden, wenn die sich durch die Messungen bestimmte Veränderung der Seilbiegesteifigkeit über die Zeit betrachtet zu schnell und/oder zu langsam erfolgt, d. h. die Veränderungsgeschwindigkeit der Seilbiegesteifigkeit einen Grenzwert überschreitet oder unterschreitet. Die Veränderungsgeschwindigkeit über die Zeit kann dabei die Veränderungsgeschwindigkeit über die Anzahl der Lastspiele sein, die beispielsweise mit einem Lastspielzähler erfasst und von der Auswerteeinrichtung berücksichtigt werden können. Alternativ oder zustätzlich kann die Veränderungsgeschwindigkeit auch nur anhand der Anzahl der Messungen der Seilbiegesteifigkeit berücksichtigt werden, beispielsweise dahingehend, dass ein Ablegesignal bereitgestellt wird, wenn die nach einer bestimmten Anzahl von Messungen, beispielsweise nach der zehnten Messung festgestellte Veränderung der Seilbiegesteifigkeit einen hierfür vorbestimmten Grenzwert überschreitet.

Das Ablegesignal kann dem Kranführer einfach angezeigt werden, beispielsweise akustisch und/oder visuell, oder es kann dazu verwendet werden, den Seiltrieb stillzusetzen.

Die Biegesteifigkeits-Bestimmungsmittel können in vorteilhafter Weiterbildung der Erfindung im Seiltrieb des Hebezeugs fest eingebaut sein, um laufend im Betrieb - d. h. im betriebsbereiten Zustand des Hebezeugs - die Seilbiegesteifigkeit bestimmen zu können, ohne das Hebezeug in einen speziellen Prüfrüstzustand umbauen zu müssen. Alternativ oder zusätzlich können die Biegesteifigkeits-Bestimmungsmittel auch als abnehmbare Einheit zum Einsatz kommen, um an verschiedenen Hebezeugen verwendet werden zu können.

In vorteilhafter Weiterbildung der Erfindung sind die Biegesteifigkeits-Bestimmungsmittel einem Seilabschnitt des Seiltriebs zugeordnet, der den meisten Biegewechseln unterworfen ist. Dies kann beim Hubseil eines Turmdrehkrans beispielsweise ein Seilabschnitt sein, der bestimmungsgemäß um die Umlenkrollen an der Laufkatze und die Umlenkrollen am Lasthaken umläuft. Je nach Ausbildung des Hebezeugs und dem Verlauf bzw. der Einscherung des Seils können dies verschiedene Seilabschnitte sein.

Die Erfindung wird nachfolgend anhand eines bevorzugten Ausführungsbeispiels und zugehörigen Zeichnungen näher erläutert. In den Zeichnungen zeigen:

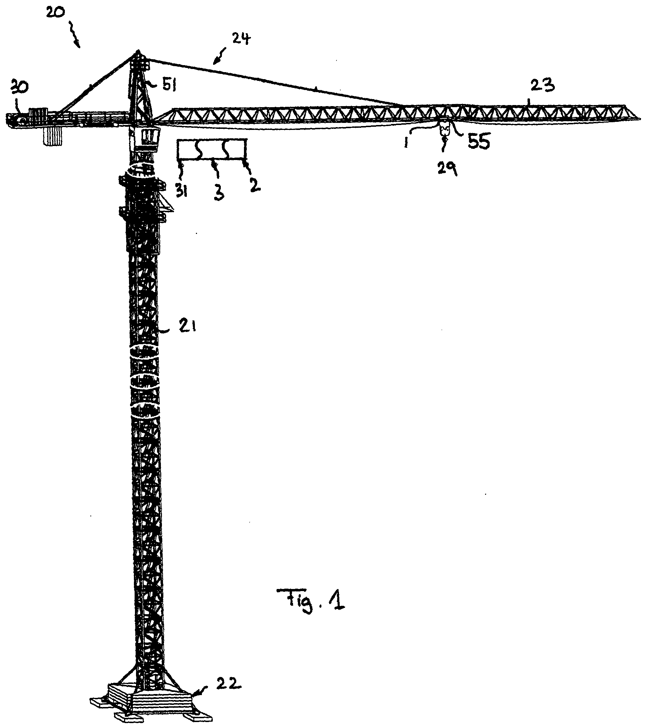

- Fig. 1:: eine schematische Darstellung eines erfindungemäßen Hebezeugs in Form eines Turmdrehkrans nach einer vorteilhaften Ausführung der Erfindung, dessen Hubseil und/oder dessen Abspannseile für den wippbaren Ausleger als Faserseile ausgebildet sein können,

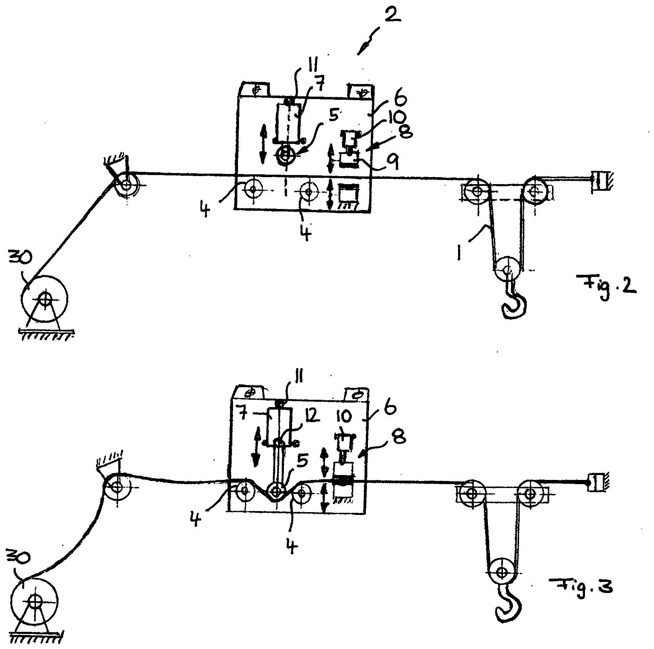

- Fig. 2:: eine schematische Darstellung des Seiltriebs des Hubseils des Krans aus Fig. 1 und der diesem Seiltrieb zugeordneten Biegesteifigkeits-Bestimmungsmittel, wobei die Bestimmungsmittel in einem Ausgangszustand gezeigt sind, in dem das Seil noch unbeaufschlagt ist und im Kranbetrieb auf- und abspulbar ist, und
- Fig. 3:: eine schematische Darstellung des Seiltriebs und der dem Seiltrieb zugeordneten Biegesteifigkeits-Bestimmungsmittel ähnlich Fig. 2, wobei die Biegesteifigkeits-Bestimmungsmittel im aktiven Prüfzustand gezeigt sind, in der das Seil geklemmt und zugentlastet einer Biegebeanspruchung unterworfen ist.

Fig. 1 zeigt beispielhaft für ein Hebezeug nach einer vorteilhaften Ausführung der Erfindung einen Kran in Form eines oben drehenden Turmdrehkrans 20, dessen Turm 21 auf einem Wagen oder einer feststehenden Basis gelagert ist. An dem Turm 21 ist in an sich bekannter Weise ein Ausleger 23 angelenkt und über eine Abspannung 24 abgespannt. Die genannte Abspannung 24 kann starr, beispielsweise in Form von Abspannstangen ausgebildet sein, aber auch verstellbar in Form einer Abspannverseilung ausgebildet sein, die über eine Abspannseilwinde in ihrer Länge veränderbar sein kann, so dass der Ausleger 23 in seinem Anstellwinkel verändert werden kann.

Wie Fig. 1 zeigt, kann der Turmdrehkran 20 dabei mit einem Laufkatzenausleger versehen sein. An dem vorgenannten in der Betriebsstellung liegend, insbesondere horizontal ausgerichteten Ausleger 23 ist eine Laufkatze 55 verfahrbar gelagert, wobei die genannte Laufkatze 55 beispielsweise mittels eines Laufkatzenseils verfahren werden kann, das über Umlenkrollen an der Auslegerspitze geführt sein kann.

Ferner umfasst der Turmdrehkran ein Hubseil 1, das über Umlenkrollen an der Auslegerspitze von der Spitze des Auslegers herabgelassen werden kann und dort mit einem Kranhaken 29 verbunden ist, oder in der Ausführung nach Fig. 1 über die besagte verfahrbare Laufkatze 55 und dort vorgesehene Umlenkrollen ablaufen und mit dem Kranhaken 29 verbunden sein kann. Das genannte Hubseil 1 läuft in beiden Fällen auf eine Hubwinde 30 auf.

Das genannte Hubseil 1 und/oder das Abspannseil können hierbei als Faserseil ausgebildet sein, das aus Kunstfasern wie beispielsweise Aramidfasern oder einem Aramid-/Kohlefasergemisch bestehen kann.

Um für die Ablegereife relevante Kenngrößen des genannten Faserseils überwachen bzw. erfassen zu können, ist eine Erfassungseinrichtung vorgesehen, die am Kran angeordnet sein kann und zusammen mit einer Auswerteeinrichtung 3, die die erfassten Kenngrößen auswertet, mit der elektronischen Kransteuereinheit 31 verbunden oder in diese integriert sein kann.

Wie die Fig. 2 und 3 zeigen, umfassen die Biegesteifigkeits-Bestimmungsmittel 2 vorteilhafterweise zwei Seilauflagerelemente 4, die beispielsweise als starre Gleitlagerbacken oder als Seilrolle ausgebildet sein können und voneinander beabstandet angeordnet sind, derart, dass sie das Seil 1 in einem Seilabschnitt quer zur Seillängsrichtung abstützen. Zwischen den beabstandeten Seilauflagerelementen 4 ist ein Querkraftstempel 5 vorgesehen, der das Seil 1 quer zur Seillängsrichtung mit einer Querkraft beaufschlagen kann. Der Querkraftstempel 5 einerseits und die beiden Seilauflagenelemente 4 andererseits sind dabei vorteilhafterweise auf gegenüberliegenden Seiten des Seils 1 angeordnet und können gemeinsam an einer Lagerplatte 6 oder einem anderen geeigneten Lagerkorpus gelagert sein.

Wie die Fig. 2 und 3 zeigen, kann der Querkraftstempel 5 quer zur Seillängsrichtung verfahren werden derart, dass das auf den Seilauflageelementen 4 aufliegende Seil eine Durchbiegung erfährt. Insbesondere kann der Querkraftstempel 5 im Bereich einer Verbindungslinie zwischen den beiden Seilauflagerelementen 4 und über diese Verbindungslinie hinaus verfahren werden. Zum Verfahren des Querkraftstempels 5 kann ein Stellaktor 7 beispielsweise in Form eines Druckmittelzylinders oder eines Elektromotors mit Stellspindel vorgesehen sein.

Der Kopf des Querkraftstempels 5 kann hierbei ebenfalls - ähnlich den Seilauflagerelementen 4 - als Gleitlagerbacke oder vorteilhafterweise als Seilrolle ausgebildet sein, um möglichst keine Kräfte in Seillängsrichtung in das Seil 1 einzuleiten.

Um das Seil 1 für die Biegesteifigkeitsmessung von Zugkräften zu entlasten, umfasst eine Zugentlastungseinrichtung 8 eine Seilklemme 9, die von einem Stellaktor 10 beispielsweise in Form eines Druckzylinders betätigbar ist, um das Seil zu klemmen und festzuhalten.

Die genannte Seilklemme 9 ist dabei vorteilhafterweise auf der Lasthakenseite bzw. der der Seiltrommel abgewandten Seite der Biegesteifigkeits-Bestimmungsmittel 2 angeordnet, so dass am Lasthaken wirkende Lasten und auch dort wirksame Seilgewichtskräfte keinen Seilzug in dem zu prüfenden Seilabschnitt induzieren können.

Weiterhin umfasst die Zugentlastungseinrichtung 8 Ansteuermittel zum Ansteuern der Seiltrommel derart, dass bei von der Seilklemme 9 geklemmtem Seil das Seil 1 ein Stück weit abgespult wird, um zwischen der Seiltrommel und der Seilklemme 9 Schlaffseil zu erzeugen bzw. das Seil dort zugkraftfrei zu schalten.

Die Biegesteifigkeit des Seils 1 kann vorteilhafterweise in folgenden Schritten bestimmt werden:
- Zunächst wird das Seil in die zu messende Position gefahren, wofür die Hubpositionsmessung des Lasthakens verwendet werden kann. Insbesondere wird ein Seilabschnitt in die Biegesteifigkeits-Bestimmungsmittel 2 gefahren, der bestimmungsgemäß den meisten Biegewechseln und/oder Lastspielen unterliegt. Gegebenenfalls können auch nacheinander mehrere Seilabschnitte in die Biegesteifigkeits-Bestimmungsmittel 2 gefahren werden, um die Biegesteifigkeit an verschiedenen Seilabschnitten zu bestimmen.
- Das Seil wird durch die Klemmvorrichtung bzw. die Seilklemme 9 fixiert.
- Das Seil 1 wird durch geringes Hubabfahren von der Trommelseite her gelockert, so dass das Seil 1 zugentlastet ist.
- Der Querkraftstempel 5 wird aus der in Fig. 1 gezeigten Ruhestellung ausgefahren und auf das Seil 1 zugefahren, um die in Fig. 3 gezeigte Seildurchbiegung zu erzeugen. Dabei wird der Biegewiderstand des Seils gemessen. Dies kann einerseits eine Messung der Kraft beinhalten, die zur Erreichung einer vorbestimmten Durchbiegung nötig ist. Alternativ oder zusätzlich kann der Stellweg des Querkraftstempels 5 und/oder die Querverschiebung des Seils gemessen werden, der/die sich bei einer vorbestimmten Querkraft einstellt. Hierzu können dem Stellaktor 7 und/oder den Seilauflagerelementen 4 Kraftmesser bzw. Kraftsensoren und/oder Wegmesssensoren zugeordnet sein.

Der hierdurch festgelegte Wert des Biegewiderstands des Seil 1 wird im Speicher der Biegesteifigkeits-Bestimmungsmittel 2 abgelegt und mit einem zulässigen, vorgegebenen Wert verglichen.
- Nach der Messung werden die Biegesteifigkeits-Bestimmungsmittel 2 in die Ausgangs- bzw. Ruhestellung zurückgestellt, wie sie in Fig. 1 dargestellt ist.
- So dann kann das Seil 1 verfahren werden, um einen anderen Seilabschnitt zu prüfen, wobei dann die zuvor genannten Schritte wiederholt werden. Alternativ kann das Seil im Kranbetrieb verfahren werden, wenn die gewünschten Messungen durchgeführt sind.
- Das Anfahren verschiedener Seilabschnitte für die Biegesteifigkeits-Bestimmung kann automatisch programmgesteuert erfolgen oder aber auch manuell dergestalt, dass über eine festgelegte Seillänge mit entsprechender Beabstandung verschiedene Messpositionen angefahren werden.

## Patentansprüche

1. Vorrichtung zum Erkennen der Ablegereife eines hochfesten Faserseils (1) beim Einsatz an Hebezeugen, insbesondere Kran, mit einer Erfassungseinrichtung zur Erfassung zumindest einer Seilkenngröße sowie einer Auswerteeinrichtung (3) zur Auswertung der Seilkenngröße sowie Bereitstellung eines Ablegesignals in Abhängigkeit der Seilkenngrößenauswertung, **dadurch gekennzeichnet, dass** die Erfassungseinrichtung Biegesteifigkeits-Bestimmungsmittel (2) zum Bestimmen der Seilbiegesteifigkeit des Seils (1) aufweist und die Auswerteeinrichtung (3) das Ablegesignal in Abhängigkeit der bestimmten Seilbiegesteifigkeit bereitstellt.

2. Vorrichtung nach dem vorhergehenden Anspruch, wobei die Biegesteifkeit-Bestimmungsmittel (2) zwei voneinander beabstandete Seilauflagerelemente (4) sowie einen von den Seilauflagerelementen (4) beabstandeten Querkraftstempel (5) zum Beaufschlagen des Seils (1) mit einer Querkraft aufweist, wobei der Querkraftstempel (5) und/oder die Seilauflagerelemente (4) quer zur Seillängsrichtung verfahrbar ist/sind derart, dass das Seil (1) eine Biegung erfährt.

3. Vorrichtung nach dem vorhergehenden Anspruch, wobei dem Querkraftstempel (5) und/oder den Seilauflagerelementen (4) ein Kraftmesser (11) und/oder ein Stellwegmesser (12) zugeordnet ist, wobei die Seilbiegesteifigkeit anhand der mit einer vorbestimmten Querkraft erzielbaren Durchbiegung und/oder anhand der für eine vorbestimmte Durchbiegung benötigten Querkraft von den Biegesteifigkeits-Bestimmungsmitteln (2) bestimmbar ist.

4. Vorrichtung nach einem der beiden vorhergehenden Ansprüche, wobei der Querkraftstempel (5) in Seillängsrichtung betrachtet zwischen den Seilauflagerelementen (4) angeordnet ist.

5. Vorrichtung nach einem der vorhergehenden Ansprüche, wobei die Seilauflagerelemente (4) und/oder der Querkraftstempel (5) einseitige Auflager bilden, an denen das Seil (1) frei biegbar und/oder drehbar ist, wobei insbesondere die Seilauflagerelemente und der Querkrafstempel (5) drehbare Seilrollen zur Querbeaufschlagung des Seils (1) umfassen.

6. Vorrichtung nach einem der vorhergehenden Ansprüche, wobei die Biegesteifigkeits-Bestimmungsmittel (2) eine Zugentlastungseinrichtung (8) zum Zugentlasten des Seils bei der Biegesteifigkeitsprüfung umfassen.

7. Vorrichtung nach dem vorhergehenden Anspruch, wobei die Zugentlastungseinrichtung (8) zumindest eine Seilklemme (9) zum Klemmen des Seils (1) auf einer der Seiltrommel abgewandten Seite der Biegesteifigkeits-Bestimmungsmittel (2) sowie Ansteuermittel zum Ansteuern der Seiltrommel derart, dass das Seil (1) bei geklemmter Seilklemme (9) ein vorbestimmtes Stück abspulbar ist, aufweist.

8. Vorrichtung nach einem der vorhergehenden Ansprüche, wobei die Auswerteeinrichtung (3) ein Ablegesignal dann, wenn die von der Biegesteifigkeits-Bestimmungsmittel (2) bestimmte Seilbiegesteifigkeit und/oder deren Veränderung einen zugehörigen Grenzwert überschreitet, bereitstellt.

9. Vorrichtung nach einem der vorhergehenden Ansprüche, wobei die Biegesteifigkeits-Bestimmungsmittel (2) Seilpositioniermittel zum automatischen Positionieren verschiedener Seilabschnitte in der Biegesteifigkeits-Bestimmungsmittel (2) für die Bestimmung der Seilbiegesteifigkeit verschiedener Seilabschnitte umfassen.

10. Kran, insbesondere Turmdrehkran, Mobilkran, Hafenmobilkran, Schiffskran oder Fahrzeugauslegerkran, mit einer Vorrichtung zur Erkennung der Ablegereife eines hochfesten Faserseils gemäß einem der vorhergehenden Ansprüche.

11. Kran nach dem vorhergehenden Anspruch, wobei die Biegesteifigkeits-Bestimmungsmittel (2) fest installiert einem Seiltrieb des Krans zugeordnet oder als abnehmbare Einheit ausgebildet sind derart, dass die Seilbiegesteifigkeit in einenm für den Kranbetrieb bereiten Rüstzustand des Krans bestimmbar ist.

12. Kran nach einem der beiden vorhergehenden Ansprüche, wobei die Biegesteifgkeits-Bestimmungsmittel (2) derart angeordnet sind, dass ein Seilabschnitt, der bestimmungsgemäß den meisten Biegewechseln und/oder Lastspielen unterworfen ist, von den Biegesteifigkeits-Bestimmungsmitteln (2) überprüfbar ist.

## Claims

1. An arrangement for detecting the discard state of a high-strength fibre rope (1) used on hoists, in particular on a crane, with a detecting means to detect at least one rope parameter and an evaluation unit (3) for evaluating the rope parameter and providing a discard signal depending on the evaluation of the rope parameter, **characterized in that** the evaluation unit comprises bending stiffness determination means (2) for determining the rope's (1) bending stiffness, and that the evaluation unit (3) provides the discard signal depending on the determined bending stiffness of the rope.

2. The arrangement according to the preceding claim, wherein the bending stiffness determination means (2) comprises two rope support elements (4) spaced apart from each other and a shear force stamp (5) spaced apart from the rope support elements (4) for applying pressure to the rope (1) with a shear force, wherein the shear force stamp (5) and/or the rope support elements (4) is/are movable across the lengthwise direction of the rope such that the rope undergoes bending.

3. The arrangement according to the preceding claim, wherein a dynamometer (11) and/or a travel meter (12) is/are associated with the shear force stamp (5) and/or the rope support elements (4), wherein the rope bending stiffness can be determined with the bending stiffness determination means (2) by means of the deflection achievable with a predetermined shear force and/or by means of the shear force required for a predetermined deflection.

4. The arrangement according to one of the two preceding claims, wherein the shear force stamp (5) is arranged between the rope support elements (4), viewed in lengthwise rope direction.

5. The arrangement according to one of the preceding claims, wherein the rope support elements (4) and/or the shear force stamp (5) form unilateral supports on which the rope (1) is freely bendable and/or rotatable, wherein in particular the rope support elements and the shear force stamp (5) comprise rotatable rope pulleys for charging the rope (1) laterally.

6. The arrangement according to one of the preceding claims, wherein the bending stiffness determination means (2) comprise a tensile force release means (8) to release the rope during the bending stiffness test.

7. The arrangement according to the preceding claim, wherein the tensile force release means (8) is provided with at least one rope clamp (9) for clamping the rope (1) on a side of the bending stiffness determination means (2) facing away from the rope drum, and with control means to control the rope drum such that the rope (1) can be unwound for a predetermined distance when the rope clamp (9) is applied.

8. The arrangement according to one of the preceding claims, wherein the evaluation unit (3) provides a discard signal when the rope bending stiffness and/or its change determined by the bending stiffness determination means (2) exceeds a certain threshold value.

9. The arrangement according to one of the preceding claims, wherein the bending stiffness determination means (2) comprise rope positioning means for the automatic positioning of various rope sections in the bending stiffness determination means (2) for determining the rope bending strength of various rope sections.

10. A crane, in particular tower crane, mobile crane, mobile harbour crane, ship's crane or vehicle boom crane, with an arrangement for detecting the discard state of a high-strength fibre rope according to one of the preceding claims.

11. The crane according to the previous claim, wherein the bending stiffness determination means (2) are rigidly installed and assigned to a rope drive of the crane or designed as a removable unit such that the rope's bending stiffness can be detected in a setup state of the crane ready for crane operation.

12. The crane according to one of the two previous claims, wherein the bending stiffness determination means (2) are arranged such that a rope section which according to its intended function is subjected to most of the bending changes and/or load cycles, can be tested with the bending stiffness determination means (2).

## Revendications

1. Dispositif pour la détection du moment de dépose d'un câble à fibres (1) à haute résistance lors d'une utilisation sur des dispositifs de levage, plus particulièrement une grue, avec un dispositif de détection pour la détection d'au moins une grandeur caractéristique du câble ainsi qu'un dispositif d'analyse (3) pour l'analyse de la grandeur caractéristique ainsi que la génération d'un signal de dépose en fonction de l'analyse de la grandeur caractéristique du câble, **caractérisé en ce que** le dispositif de détection comprend des moyens de détermination de rigidité (2) pour la détermination de la rigidité du câble (1) et le dispositif d'analyse (3) génère le signal de dépose en fonction de la rigidité déterminée du câble.

2. Dispositif selon la revendication précédente, les moyens de détermination de rigidité (2) comprenant deux éléments d'appui de câble (4) ainsi qu'un poinçon de force transversale (5) éloigné des éléments d'appui de câble (4) pour la sollicitation du câble (1) avec une force transversale, le poinçon de force transversale (5) et/ou les éléments d'appui du câble (4) étant mobiles de manière transversale par rapport à la direction longitudinale du câble, de façon à ce que le câble (1) soit soumis à une flexion.

3. Dispositif selon la revendication précédente, un dispositif de mesure de force (11) et/ou un dispositif de mesure de course (12) correspondant au poinçon de force transversale (5) et/ou aux éléments d'appui de câble (4), la rigidité du câble pouvant être déterminée à l'aide de la flexion pouvant être obtenue avec une force transversale prédéterminée et/ou à l'aide de la force transversale nécessaire pour obtenir une flexion prédéterminée, par les moyens de détermination de rigidité (2).

4. Dispositif selon l'une des deux revendications précédentes, le poinçon de force transversale (5) étant disposé dans la direction longitudinale du câble, vu entre les éléments d'appui du câble (4).

5. Dispositif selon l'une des revendications précédentes, les éléments d'appui du câble (4) et/ou le poinçon de force transversale (5) formant des appuis unilatéraux, au niveau desquels le câble (1) peut être plié et/ou tourné librement, plus particulièrement les éléments d'appui du câble et le poinçon de force transversale (5) comprenant des galets rotatifs pour la sollicitation transversale du câble (1).

6. Dispositif selon l'une des revendications précédentes, les moyens de détermination de rigidité (2) comprenant un dispositif de décharge de traction (8) pour la décharge de traction du câble lors de la vérification de la rigidité.

7. Dispositif selon la revendication précédente, le dispositif de décharge de traction (8) comprenant au moins une borne de câble (9) pour le serrage du câble (1) sur un côté des moyens de détermination de rigidité (2) opposé au tambour de câble ainsi que des moyens de commande pour la commande du tambour de câble de façon à ce que le câble (1) puisse être déroulé d'une distance prédéterminée lorsque la borne du câble (9) est serrée.

8. Dispositif selon l'une des revendications précédentes, le dispositif d'analyse (3) génère un signal de dépose lorsque la rigidité du câble déterminée par les moyens de détermination de rigidité (2) et/ou sa variation dépasse une valeur limite correspondante.

9. Dispositif selon l'une des revendications précédentes, les moyens de détermination de rigidité (2) comprenant des moyens de positionnement du câble pour le positionnement automatique de différentes portions du câble dans les moyens de détermination de rigidité (2) pour la détermination de la rigidité de différentes portions du câble.

10. Grue, plus particulièrement grue à tour, grue mobile, grue portuaire, grue de navire ou grue à flèche sur véhicule, avec un dispositif de détection du moment de dépose d'un câble à fibres à haute résistance selon l'une des revendications précédentes.

11. Grue selon la revendication précédente, les moyens de détermination de rigidité (2) étant installés de manière fixe sur un entraînement de câble de la grue ou sont conçus comme une unité amovible, de façon à ce que la rigidité du câble puisse être déterminée dans un état de préparation de la grue, prêt pour le fonctionnement de la grue.

12. Grue selon l'une des revendications précédentes, les moyens de détermination de rigidité (2) étant disposés de façon à ce qu'une portion du câble, qui est soumise lors de l'utilisation à la plupart des variations de flexion et/ou des cycles de charges, puisse être contrôlée par les moyens de détermination de rigidité (2).
